# EUROPEAN PATENT APPLICATION

(11) **EP 4 606 655 A1**
(43) Date of publication of application: **27.08.2025**
(21) Application number: 24158859.9
(22) Date of filing: 21.02.2024
(51) Int. Cl.: B60R 16/033, B60R 16/00, B60R 16/023, B60L 1/00, B60L 3/00, B60L 3/04, H01R 13/447, H01R 31/08, H01R 13/70

(54) **HIGH VOLTAGE JUNCTION BOX WITH INTERLOCKING CIRCUIT OF BATTERY OPERATED POWER SYSTEM, AND METHOD FOR DISASSEMBLING IT**

(71) Applicant: Aptiv Technologies AG, 8200 Schaffhausen (CH)
(72) Inventor: GUILLANTON, Erwan, 28230 Épernon (FR); TRICHARD, Laurent, 28230 Épernon (FR)
(74) Representative: INNOV-GROUP

(57) **Abstract**

Present disclosure relates to a high voltage junction box with an interlocking circuit (149), for high voltage battery operated systems especially electric vehicles.

Junction box (1) comprises a protection cover (13) assembled on main housing (11). An interlocking part (18,18') is electrically connected, by insertion contact, shunting two interlocking terminals (145) fixed within the main housing. It cooperates with protection cover, that can not be removed without said interlocking part being extracted from interlocking terminals, thus providing a cover opening detection.

A watertight closing cover (12) may have an integrated plastic interlocking extension (182), internally protruding through an opening of protection cover and having a cavity (180) containing a metallic one-piece interlocking shunt (185). Opening closing cover thus opens interlocking circuit.

Alternatively, interlocking part (18') is separated from closing cover (12), with interlocking extension (182) protruding through protection cover (13), while being maintained outside it by maintaining portion (181). It thus has to be removed for opening protection cover.

## Description

The present disclosure relates to a high voltage junction box with an interlocking circuit, and the field of high voltage battery operated systems, especially electric vehicles.

Electric vehicles are more and more powered by large battery banks, made of strings of batteries in series that can achieve operating voltages called high voltages, higher than 48V and currently often around 400V, and sometimes higher than 800V, with a current possibly up to 400A or 500A, mostly in direct current. Such voltages are typically ranging up to 1500V or 2000V, or up to 4000V.

Within the vehicle, battery terminal, traction motor and some high power accessories use such a high voltage, and often also the charging system. As such high voltages pose major risks in case of misconduct, either for the systems or a human operator, specific security precautions are enforced in such system design.

Various high voltages systems are connected together through a specific junction box, called high voltage junction box (or "HVJB"), mostly one but possibly several. This junction box typically contain positive and negative high voltage connections for the battery pack, the traction motor and high power accessories, and the charging system. These high voltages are mostly made through internal busbars, and encompass power fuses. Such junction box is typically made of metal, so as to provide an electromagnetic shielding between internal and external spaces.

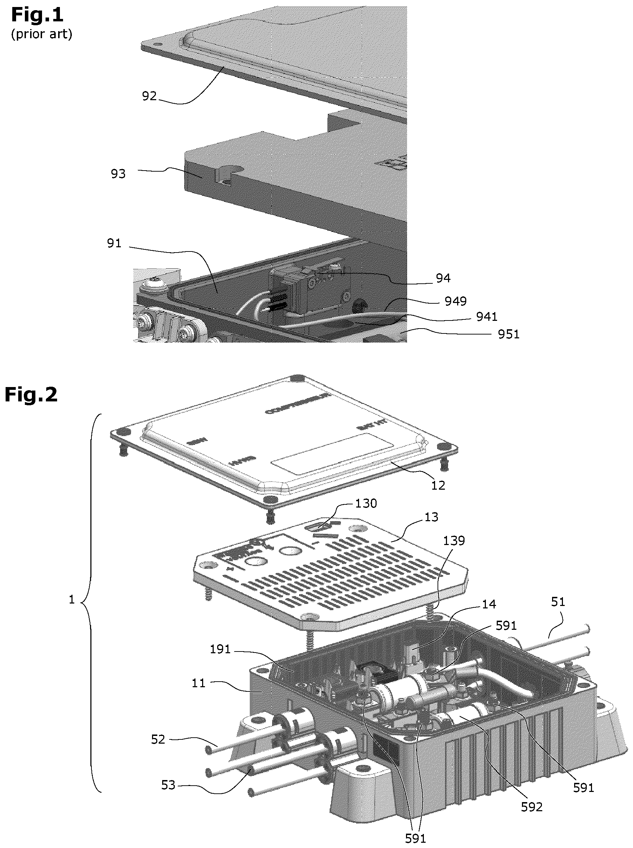

An example of such high voltage junction box is illustrated in Fig.1: a square main housing 91 of cast and machined aluminium alloy, contains insulating plastic supports 941 that receive the electrical elements 951; said housing 91 being topped by a protecting but non sealing plastic cover 93, and topped with a sealing closing metal cover 92 that is screwed in electrical continuity on the main housing 91.

So as to protect any operator that needs to service such a junction box, it is provided an "interlock system" that will automatically disconnect the high voltage source(s) before any high voltage terminal could be accessible to such an operator. Such interlock system requires that any opening of the junction box is detected before allowing finger access to the any high voltage live elements.

As illustrated in Fig.1, such detection is typically provided by a electromechanical sensor switch 94, operating on a low voltage (e.g. 12V), the circuit 949 of which is interrupted when the closing cover 92 stops pushing on the lever of the sensor switch 94 through a cut-out 930 of the protection cover 93.

One aim of the invention is to overcome some or all of the disadvantages of the prior art. In a vehicle, all components are submitted to various and numerous environmental conditions, such as temperatures and hygrometry and also vibrations. Also, service operations may be done by operators or even users with unpredictable or uncertain skills. Thus, it is desirable to insure or even improve ergonomics and security of such a junction box, and also durability and reliability of its security systems. Also, it is desirable to provide more simplicity and rapidity, in manufacturing and maintenance, as well as simplicity and flexibility of its design, adaptation, manufacturing or servicing process. This is aimed together with keeping or improving existing performances and qualities of the prior art, or the compromises between some or all of these criteria.

### Summary of the disclosure

These objectives are achieved partially or wholly, according to the disclosure, by a device and/or method having the features set forth in the claims. The claims form an integral part of the technical instruction provided herein in connection with the disclosure.

In this context it is disclosed a high voltage junction box according to claim 1. This device may also optionally include at least one of the features of any one of claims 2 to 8. It is also disclosed an autonomous electric vehicle or motorized system comprising such a junctions box, according to any one of claim 9 to 11.

The disclosure also relates to a method for disassembling such a high voltage junction box, according to claim 13 to 14.

Disclosure relates to a high voltage junction box with an interlocking circuit, for high voltage battery operated systems especially electric vehicles.

Junction box comprises a protection cover assembled on main housing. An interlocking part is electrically connected, by insertion contact, shunting two interlocking terminals fixed within the main housing. It cooperates with protection cover, that can not be removed without said interlocking part being extracted from interlocking terminals, thus providing a cover opening detection.

A watertight closing cover may have an integrated plastic interlocking extension, internally protruding through an opening of protection cover and having a cavity containing a metallic one-piece interlocking shunt. Opening closing cover thus opens interlocking circuit.

Alternatively, interlocking part is separated from closing cover, with interlocking extension protruding through protection cover, while being maintained outside it by maintaining portion. It thus has to be removed for opening protection cover.

Thanks to these provisions, it is possible to avoid using an electromechanical detection switch such as in the prior art, which switch is more complex to position and may be a source of dysfunction over time and, and constitutes a source of cost and complexity in the manufacturing process. In its preferred embodiments, present disclosure further allows to manufacture the closing cover in an insulating material, such as injected plastic, which allows more flexibility in designing its shape and also in its manufacturing supply chain.

Multiple embodiments of invention are hereby envisioned, which comprise the optional features here disclosed, according to all of their feasible combinations.

### List of drawings

Other advantages and features will become apparent on examination of the detailed description of three examples that are in no way limitative, and the attached drawings, in which:
- Fig. 1 is a partial view in perspective of a junction box according to a prior art, where presence or absence of the closing cover is detected by the interlocking circuit through a sensor switch fixed inside a wall of the main housing;
- Fig.2 is a perspective view of a high voltage junction box, assembled and with its covers being removed, according to a first exemplary embodiment of the disclosure;
- Fig.3 is a detailed section view of the interlocking detection area, of the embodiment of Fig.2 with its covers closed;
- Fig.4 is a perspective view of the main parts involved in interlocking detection for the embodiment of Fig.2;
- Fig.5 is a partial section view of the closing cover of the embodiment of Fig.2, in its interlocking part area;
- Fig.6 is a detailed section view of the interlocking detection area of a high voltage junction box, assembled and with its covers closed, according to a second exemplary embodiment of the disclosure;
- Fig.7 is a perspective view of the main parts involved in interlocking detection for the embodiment of Fig.6;
- Fig.8a and Fig.8b are detailed perspective views of the interlocking part and its insertion location in the protection cover, in the embodiment of Fig.6.

### Description in reference to the drawings

In the various figures, similar or identical elements have the same references.

### First exemplary embodiment

Fig.2 to Fig.5 illustrate a first example of embodiment of the disclosure. The high voltage junction box 1 has a square or rectangular main housing 11 with upward opening.

Electrical elements are mounted on injected plastic support(s) 141, that are fixed within this housing 11, here including high voltage power fuses 592, busbars and connections 591 between outgoing electrical high voltage conductors 51, 52, 53. Other conductors may exist that are not represented here.

A protection cover 13 made of insulating material, here injected plastic, is provided over the high voltage electrical elements and within the walls of the main housing 11. A dirt-tight or preferably watertight cover, called closing cover 12, is assembled on the upward edges of the main housing 11 walls, here compressing a rubber watertight sealing 112.

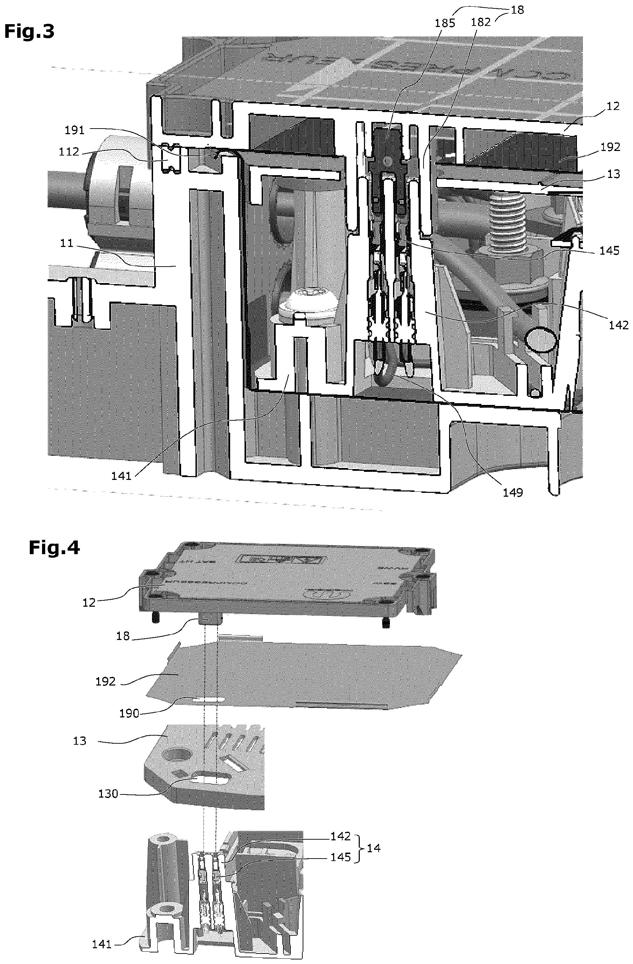

In this exemplary embodiment, the main housing 11 and the closing cover 12 are made of an insulating material, such as injected plastic. A shaped metal sheet 191, such as obtained through stamping and/or deep-drawing, overlies the internal faces of the main housing 11, thus providing an electromagnetic shielding. As illustrated in Fig.3, the insulating supports 141 are fixed within and through this shielding 191.

A shielding cover 192, illustrated in Fig.4, is made of a stamped and bent metal sheet. It is compressed between the closing cover 12 and the outwardly curved top edges of the main housing shielding 191 so as to provide electrical continuity with said cover shielding 192, outside of the protection cover 12, as can be seen in Fig.3. A global shielding is thus provided around the electrical elements of the junction box 1.

Main housing 11 and closing cover 12 of this HV junction box 1 are preferably made by casting an injected material such as by plastic injection.

Within the main housing 11, the low voltage electrical circuit 149 includes two series-connected terminals 145, here in a female shape, which are mounted with an extension 142 of a support 141 and are oriented toward the covers, thus forming an interlocking portion 14 of the main housing 11.

When the closing cover 12 is assembled on the main housing 11, as illustrated in Fig.3, these two housing terminals 145 are electrically connected together by each of them insertion-receiving a branch 1854 of a one-piece metallic shunting terminal 185, called interlocking shunting terminal, fixed to the closing cover 12. The interlocking circuit is thereby electrically closed, thus informing the external controlling unit (not represented) that the junction box 1 is actually closed.

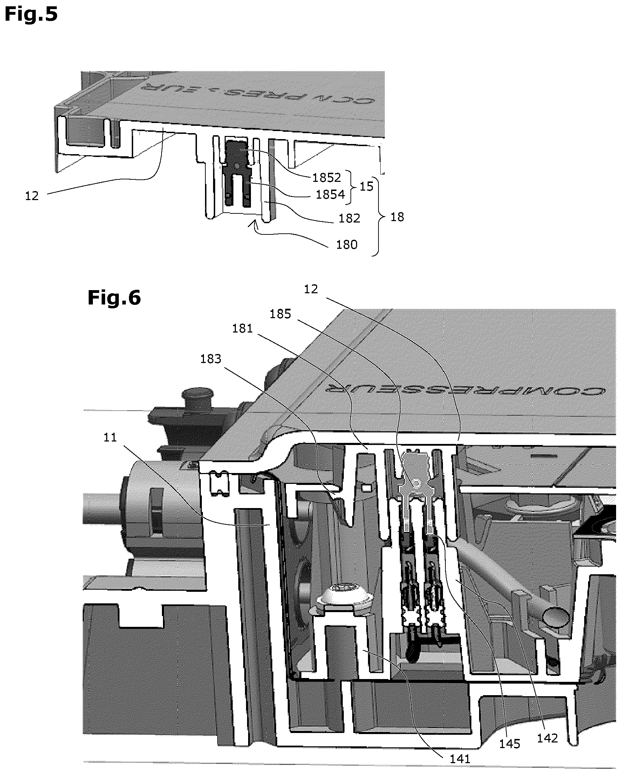

As detailed in Fig.5, this shunting terminal 185 has a teethed fixing part 1852 which is forcedly inserted into a fixing cavity on the internal face of the closing cover 12. This shunting terminal 185 is disposed in a connection cavity 180 surrounded by a skirt forming an extension 182 that protrudes from the closing cover 12 material. This portion of the closing cover 12 thus forms an interlocking portion, here also called interlocking part 18.

As illustrated in Fig.4, upon closing of the cover 12, the extension 182 of the interlocking part 18 is aligned with and goes through an opening 1920 of the shielding cover 192, then through an opening 1310 of the protection cover 13. The skirt 182 of the interlocking portion 18 of the closing cover 12 then surrounds the interlocking extension 142 of the main housing interlocking portion 14 with the shunting terminal 185 inserted within and connected with the interlocking terminals 145 in the main housing.

### Second exemplary embodiment

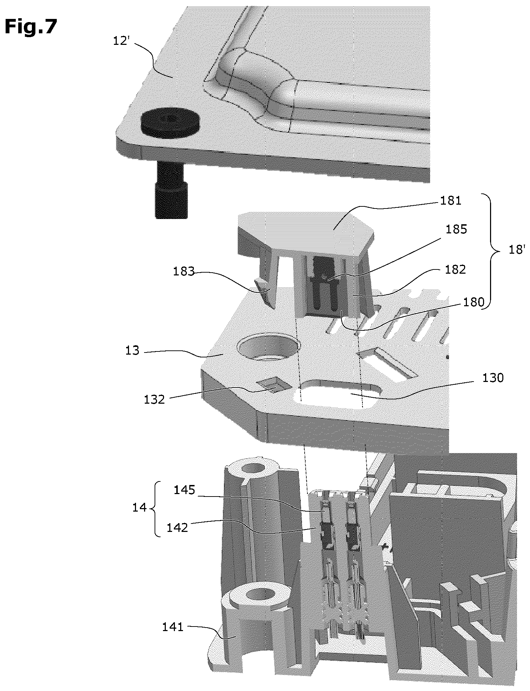

Fig.6 and Fig.7 illustrate second example of embodiment of the disclosure, that could be seen as a variant of the first example, and will be described only in its differences.

In this embodiment, as can be seen in Fig.7, the interlocking part is manufactured as a part separate form the closing cover. This interlocking part 18' similarly comprises an extension 182 surrounding a connection cavity 180 with a shunting terminal 185 therein. However, these elements are fixed on a small plate 181 instead of being part of the closing cover. The closing cover 12' is here separate and need no internal protrusion.

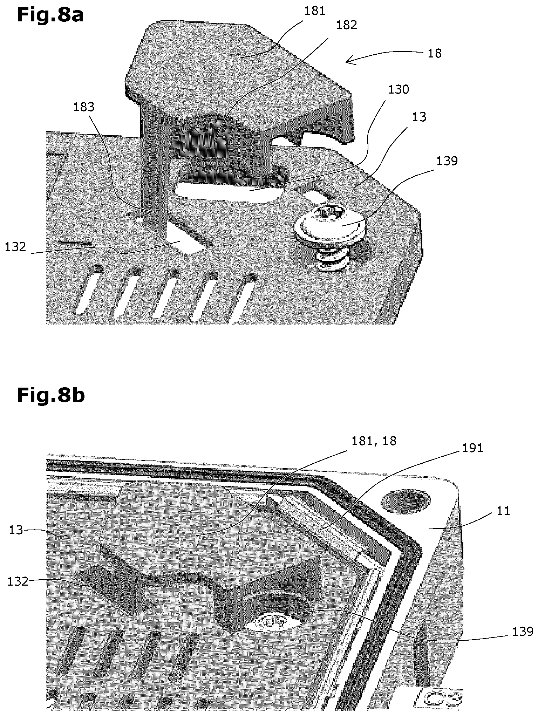

As illustrated in Fig.8a and Fig.8b, once the protection cover 13 has been assembled and fixed within the main housing 11, with any type of fixation means such as screws 139, the interlocking part 18' is inserted in the interlocking pass-through opening 130 of said protection cover 13. The shape and position of the interlocking part 18' is designed so as to mask at least one fixation means and keep it inaccessible for dismounting as long as said interlocking part 18' has not been removed. As an example, the plate 181 here covers one screw 139 of the protection cover 13, preventing it to be unscrewed. The interlocking part 18' is preferably locked with the protection cover 13, here by a snap-in latch 183 inserted in an opening 132.

Of course, the disclosure is not limited to the examples just described, and many adjustments can be made to these examples without departing from the scope of the disclosure.

### List of references

### Prior art

- 91: main housing
- 94: sensor switch
- 949: interlocking circuit

### Disclosure

- 11: main housing
- 112: watertight sealing of the main housing
- 12 , 12': closing cover
- 13: protecting cover
- 130: protecting cover passthrough opening
- 131: protection cover interlocking opening
- 132: protection cover latching opening
- 14: housing interlock (IL) portion
- 141: support of electrical elements within main housing
- 142: housing side IL extension
- 145: housing side IL terminals
- 149: interlocking circuit
- 18, 18': interlocking (IL) part
- 180: IL part connection cavity
- 182: IL part extension
- 185: IL part shunting terminal
- 1852: fixing part of IL part shunting terminal
- 1854: connection part of IL part shunting terminal
- 191: shielding of main housing
- 192: shielding cover
- 1920: opening in shielding cover
- 51: HV conductor
- 52: HV conductor
- 53: HV conductor
- 591: HV connections
- 592: HV fuse

## Claims

1. Electrical junction box (1) comprising at least a cover (12, 13) and a main housing (11), preferably watertight,
designed for, within an electrical system powered by a rechargeable electrical power source called battery, fixedly containing one or several electrical high voltage connections (591) between electrical high voltage conductors (51, 52, 53) that may be subjected to a voltage of at least 48V, called high voltage;
said junction box (1) comprising means for detecting a condition where a cover opening enables said high voltage connections to become accessible for bodily contact with an operator;
said detection means being adapted for communicating through a low voltage interlocking circuit (149) with a high voltage disconnection controlling unit, so as for said controlling unit to disconnect said high voltage conductors from a high voltage source before said high connections become accessible for bodily contact with an operator,
**characterized in that** it comprises:
- an insulating protection cover (13), that is removably assembled with the main housing (11) so as to prevent bodily contact from an operator, and
- an interlocking part (18, 18'), that is electrically connected, by insertion contact, with at least two interlocking terminals (145) of the interlocking circuit (149) so as to electrically shunt said two interlocking terminals, said interlocking terminals being fixed within the main housing;
and **in that** said interlocking part (18, 18') cooperates with said protection cover (13) so that said protection cover can not be removed without said interlocking part being first or simultaneously extracted from the interlocking terminals, thus providing said interlocking circuit with an information of detecting a cover opening.

2. Junction box according to the preceding claim, **characterized in that** the electrical shunting is done by a metallic one-piece part, called interlocking shunt (185), that is forcedly inserted within a cavity of an insulating, preferably plastic part.

3. Junction box according to any one of the preceding claims, **characterized in that** the interlocking part (18) is integrated in or fixed to a watertight closing cover (12).

4. Junction box according to the preceding claim, **characterized in that** the closing cover (12) has an integrated plastic portion, called interlocking extension (182), that protrudes from its internal face and has a cavity (180) oriented toward the interlocking terminals (145) in which a metallic one-piece part, called interlocking shunt (185), is forcedly inserted, thus forming the interlocking part (18).

5. Junction box according to the preceding claim, **characterized in that** the main housing (11) is closed by the closing cover so as to contain the protection cover (13), the latter being preferably a separate part, and **in that** the interlocking extension (182) passes through an opening (130) of said protection cover, for its interlocking shunt (185) to be connected with the interlocking terminals (145) when the protection cover (13) is assembled with the main housing (11).

6. Junction box according to any one of claims 1 to 3, **characterized in that** the main housing is closed by a watertight closing cover (12'), so as to contain the protection cover (13),
and **in that** the interlocking part (18') is separated from the closing cover (12') and has:
- an elongated connecting portion (182) that passes through an opening (130) of said protection cover for connecting an electrical shunt (185) to the interlocking terminals (145) when said protection cover (13) is assembled with the main housing (11), and
- a maintaining portion (181) that extends beyond the edges said opening on the external side of said protection cover (13), opposite to the interlocking terminals (145).

7. Junction box according to the preceding claim, **characterized in that** the protection cover (13) is assembled with the main housing by one or several fixation means, such as screws (139) or locking pins, and **in that** the maintaining portion (181) of the interlocking part (18') comprises a plate portion (181) that covers at least one of said screws (139) or pins, so that said interlocking part (18') has to be removed for said fixation means to be removed, thus requiring un-shunting the interlocking terminals (145) for removing the protection cover (13).

8. Junction box according to the preceding claim, **characterized in that** the interlocking part (18') is assembled with the protection cover by a snapping pass-through hook (183).

9. Autonomous electric vehicle or motorized system energized through power supplying electrical conductors from with a rechargeable electrical power source, called battery,
**characterized in that** it comprises at least one electrical junction box (1) according to any one of the preceding claims, that contains one or several electrical connections (591) between at least two of said power supplying electrical conductors (51, 52, 53).

10. Vehicle or system according to the preceding claim, **characterized in that** its battery subjects said connected conductors (51, 52, 53) to a voltage of at least 48V, for example more than 100V, notably more than 200V; and less than 4000V, for example less than 2000V, notably less than 1000V.

11. Vehicle or system according to any one of claims 9 to 10, **characterized in that** its battery supplies said connected conductors (51, 52, 53) with a direct current, of for example more than 10A and/or for example less than 1000A.

12. Method for disassembling an electrical junction box according to any one of claims 1 to 6, comprising the following steps:
- disassembling the protection cover (13), thus un-shunting the interlocking terminals (145),
- detecting said terminals un-shunting, through the interlocking circuit (149), by the high voltage disconnection controlling unit
- disconnecting the connected conductors (51, 52, 53) from the high voltage source, by said high voltage disconnection controlling unit.

13. Method for disassembling an electrical junction box (1) according to any one of claims 3 to 6, comprising the following steps:
- disassembling the closing cover (12), thus un-shunting the interlocking terminals (145),
- detecting said terminals un-shunting, through the interlocking circuit (159), by the high voltage disconnection controlling unit
- disconnecting the connected conductors (51, 52, 53) from the high voltage source, by said high voltage disconnection controlling unit,
- disassembling the protection cover (13), thus gaining access to the high voltage connections within the junction box.

14. Method for disassembling an electrical junction box (1) according to any one of claims 7 to 8, comprising the following steps:
- disassembling the closing cover (12'), thus gaining access to the protection cover (13),
- extracting the interlocking part (18'), thus un-shunting the interlocking terminals (145),
- detecting said terminals un-shunting, through the interlocking circuit (149), by the high voltage disconnection controlling unit
- disconnecting the connected conductors (51, 52, 53) from the high voltage source, by said high voltage disconnection controlling unit,
- disassembling the protection cover (13), thus gaining access to the high voltage connections (51, 52, 53) within the junction box.
